Europäisches Patentamt

European Patent Office

Office européen des brevets

(11) Veröffentlichungsnummer : **0 185 275**
**B1**

(12)

# EUROPÄISCHE PATENTSCHRIFT

(45) Veröffentlichungstag der Patentschrift :
19.07.89

(21) Anmeldenummer : 85115553.1

(22) Anmeldetag : 06.12.85

(51) Int. Cl.⁴ : **B 29 C 67/22**, B 29 C 69/00 //
B29K105:04, B29K75:00,
B29L31:10

(54) Verfahren und Vorrichtung zum Herstellen von Hartschaumplatten, insbesondere aus Polyurethan.

(30) Priorität : 12.12.84 DE 3445290

(43) Veröffentlichungstag der Anmeldung :
25.06.86 Patentblatt 86/26

(45) Bekanntmachung des Hinweises auf die Patenterteilung : 19.07.89 Patentblatt 89/29

(84) Benannte Vertragsstaaten :
AT BE CH DE FR GB IT LI NL SE

(56) Entgegenhaltungen :
CH–A– 451 488
US–A– 3 793 122
US–A– 4 407 179
DERWENT JAPANESE PATENTS GAZETTE, Sektion CH, Woche 7213, Derwent Publications Ltd, London, GB; & JP-B-72 010 539 (TOKYO BOSHITSU KOGYO K.K.) 29-03-1972

(73) Patentinhaber : ELASTOGRAN POLYURETHANE GMBH
Landwehrweg
D-2844 Lemförde (DE)

(72) Erfinder : Adolf, Herbert
Siffelhofener Strasse 2
D-8121 Antdorf (DE)

(74) Vertreter : Schweiss, Werner, Dr. et al
BASF Aktiengesellschaft Patentabteilung Carl-Bosch-Strasse 38
D-6700 Ludwigshafen (DE)

## Beschreibung

Die Erfindung betrifft ein Verfahren nach dem Oberbegriff des Anspruchs 1 sowie eine Vorrichtung nach dem Oberbegriff des Anspruchs 3. Ein derartiges Verfahren und eine derartige Vorrichtung sind in der Praxis allgemein üblich.

Zur Herstellung von Hartschaumplatten wird im allgemeinen von in sogenannten Doppelbandanlagen kontinuierlich gefertigten Strängen ausgegangen. Diese sind mit festen oder mehr oder weniger flexiblen Deckschichten kaschiert. Flexible Deckschichten sind beispielsweise Bleche, die gegebenenfalls profiliert werden. Am Ende der Doppelbandanlage befindet sich eine Sägeeinrichtung, die den fortlaufend erzeugten Hartschaumstrang ablängt. Es besteht nun in der Praxis die Forderung, einzelne Elemente aus dem fortlaufend produzierten Hartschaumstrang herzustellen, die vorzugsweise an einer Kante einen Abschnitt aufweisen, der nur noch aus einer Deckschicht besteht, d. h. es soll ein Streifen vorgesehen sein, bei dem die eine Deckschicht und der Hartschaum entfernt sind. Derartige Elemente können dann beispielsweise zur Abdeckung von Gebäudedächern so verlegt werden, daß der verbliebene Deckschichtenabschnitt über einem angrenzenden Element liegt und so eine dichte Verlegung ermöglicht. Um dieses zu erreichen, ist es nicht nur erforderlich mittels der Sägeeinrichtung zwei parallele Schnitte durchzuführen, von denen der eine Schnitt ein vollständiger Trennschnitt ist und der andere Schnitt nur die eine, vorzugsweise die obere Deckschicht und den darunter liegenden Hartschaum durchtrennt, sondern es muß in dem Bereich auf die andere, im allgemeinen die untere Deckschicht vor Auftrag des Komponentengemisches ein Trennmittel aufgegeben werden, welches verhindert, daß der sich bildende Hartschaum in diesem Bereich an der unteren Deckschicht haftet. Mit anderen Worten, der Hartschaum muß nach dem Durchführen der Trennschnitte leicht entfernt werden können. Derartige Doppelbandanlagen weisen eine große Länge, beispielsweise eine Länge von 80 m, auf. Die Station, die für den Trennmittelauftrag sorgt, liegt am Anfang der Anlage und die Sägeeinrichtung am Ende. Wenn nun am Anfang Trennmittel auf die untere Deckschicht aufgegeben wird, so ist es erforderlich, daß die Trennschnitte am Ende möglichst genau in Übereinstimmung mit dem Trennmittelauftrag vorgenommen werden, so daß nicht nur eine Produktion mit genauen, reproduzierbaren Längen erfolgt, sondern die Schnitte auch dort vorgenommen werden, wo sich das Trennmittel befindet und wo das Hartschaummaterial entfernt werden soll.

Es ist nun bereits versucht worden, dort, wo der Trennmittelauftrag erfolgte, eine mechanische Markierung anzubringen, die dann am Ende der Doppelbandanlage genutzt werden kann, um die Sägeeinrichtung zu steuern. Diese Versuche waren aber wegen der großen Ungenauigkeiten nicht immer zufriedenstellend.

Der Erfindung liegt daher die Aufgabe zugrunde, ein Verfahren der eingangs genannten Art zu schaffen, bei dem die Querschnitte am Ende der Doppelbandanlage in möglichst genauer Übereinstimmung mit dem am Anfang aufgebrachten Trennmittel erfolgen und so für eine genaue — auch bei fortlaufender Produktion — und reproduzierbare Herstellung entsprechender Hartschaumelemente mit ausgetrennten Abschnitten gesorgt wird.

Diese Aufgabe wird durch das Kennzeichnen des Anspruches 1 bzw. bei der entsprechenden Vorrichtung durch das Kennzeichen des Anspruches 3 gelöst.

Erfindungsgemäß wird die Position der Trennmittelaufgabe in einen Rechner eingegeben. Gleichzeitig wird die zurückgelegte Wegstrecke des Schaumstoffstranges bzw. der Deckschicht(en) gemessen und ebenfalls in den Rechner eingegeben. Bei Kenntnis des Abstandes zwischen der Trennmittelaufgabestation und der Sägeeinrichtung ist es nun sehr genau möglich, die Sägeeinrichtung zu steuern.

In vorteilhafter Weise wird das Verfahren so durchgeführt, wie in Anspruch 2 angegeben. Normalerweise ist die Sägeeinrichtung, insbesondere bei entsprechend breiten Schaumstoffsträngen über ein kurzes Stück mit dem Schaumstoffstrang verfahrbar, um während des Schnittes eine Relativbewegung in Transportrichtung des Schaumstoffstranges auszuschließen. Zu diesem Zweck wird die Sägeeinrichtung auf die Transportgeschwindigkeit des Schaumstoffstranges beschleunigt. Durch das erfindungsgemäße Verfahren ist es möglich, die Eigengeschwindigkeit der Sägeeinrichtung, gegenüber der Transportgeschwindigkeit, so zu verändern, daß der Rechner erst dann die Sägeeinrichtung mit dem Hartschaumstrang verspannt und den Trennschnitt auslöst, wenn auch unter Berücksichtigung der Eigenbewegung der Säge die exakte Stellung im Verhältnis zum mit Trennmittel versehenen Abschnitt erreicht ist. Nach Durchführung des Trennschnittes wird die Verspannung gelöst und die Sägeeinrichtung wird in ihre Ausgangsposition zurückbewegt.

Die Vorrichtung zur Durchführung des Verfahrens besitzt eine aus einem oberen und unteren und jeweils eine Deckschicht aufnehmenden Förderband bestehende Doppelbandanlage, eine Trennmittelstation zum Aufgeben des Trennmittels auf die untere Deckschicht, ein Beschichtungsportal zum Auftragen der Hartschaum bildenden Komponenten sowie eine relativ zu dem mit den Deckschichten kaschierten Hartschaumstrang verfahrbare Sägeeinrichtung und ist dadurch gekennzeichnet, daß die von einer Deckschicht zurückgelegte Wegstrecke durch ein entsprechende elektrische Impulse gebendes Zählwerk festgehalten wird, das die Bewegung eines der Bänder der Doppelbandanlage erfaßt. Zweckmäßige Weiterbildungen der Vorrichtung sind Gegenstand der Unteransprüche 4 bis 6.

Im folgenden wird die Erfindung unter Hinweis auf die Zeichnungen näher erläutert.

Es zeigt :

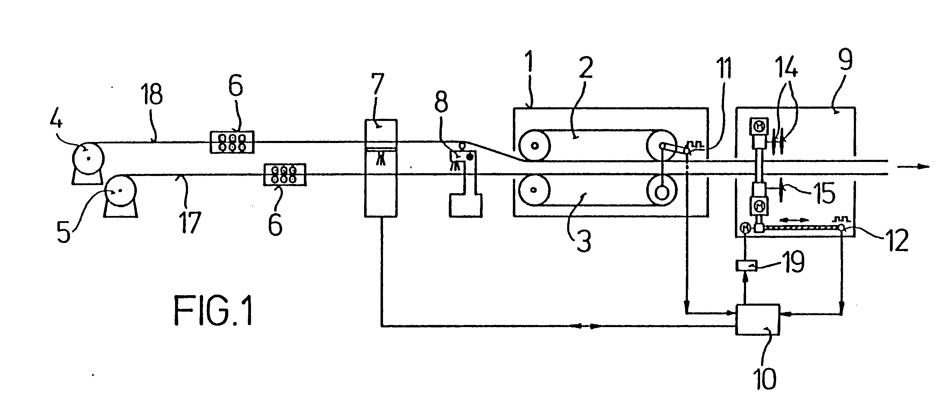

Figur 1 eine schematische Seitenansicht einer Vorrichtung zur Durchführung des erfindungsgemäßen Verfahrens ; und

Figur 2 eine schematische Seitenansicht im vergrößerten Maßstab am Ende der Produktionseinrichtung zur Veranschaulichung des zu erzeugenden Hartschaumelementes und der wesentlichen Teile der Sägeeinrichtung.

Die in der Zeichnung dargestellte Vorrichtung besteht aus einer Doppelbandanlage 1 mit einem oberen und unteren Förderband 2, 3.

Die Deckschichten 17, 18 werden von Vorratstrommeln 4, 5 abgewickelt und gegebenenfalls bei 6 profiliert. Mit 7 ist die Station zur Aufbringung des Trennmittels bezeichnet. Im Anschluß an die Trennmittelstation 7 ist das Beschichtungsportal 8 zum Auftragen der Hartschaum bildenden Komponenten vorgesehen.

In dem Doppelband findet das Ausreagieren und Aushärten des Komponentengemischs statt. Die Sägeeinrichtung ist mit 9 bezeichnet.

Beim Aufgeben des Trennmittels auf die untere Deckschicht wird ein elektrisches Signal erzeugt, das in den Rechner 10 eingegeben wird. Ein erstes Zählwerk 11 ist mit der einen Umlenkwelle des oberen Förderbandes 2 verbunden und zählt so die von dem Hartschaumstrang zurückgelegte Wegstrecke. Das Zählwerk 11 erzeugt ein elektrisches Signal, das ebenfalls in den Rechner 10 eingegeben wird.

An der Sägeeinrichtung 9 ist ein zweites Zählwerk 12 vorgesehen, das die Bewegung der Sägeeinrichtung erfaßt und ein entsprechendes elektrisches Signal in den Rechner 10 eingibt.

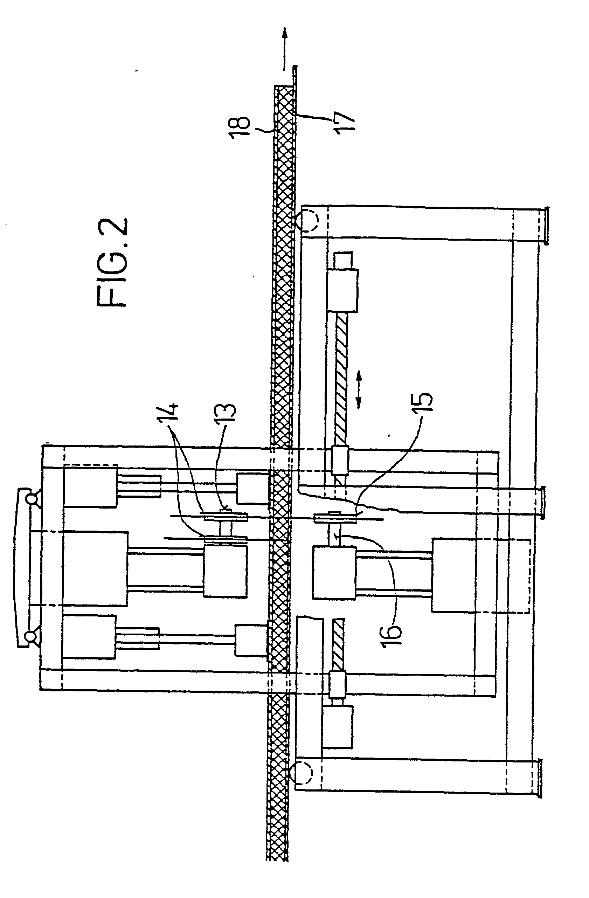

In Figur 2 ist der Schaumstoffstrang im Längsschnitt dargestellt. Es ist erkennbar, daß die untere Deckschicht 17 gegenüber der oberen Deckschicht 18 vorsteht und daß ein entsprechender Abschnitt des Hartschaumstoffes entfernt wurde. Um dieses zu erreichen, sind oben zwei auf einer gemeinsamen Welle 13 sitzende Sägeblätter 14 vorgesehen, die einen Schnitt durch die obere Deckschicht bis in die Nähe der unteren Deckschicht durchführen. Ein zweites unterhalb angeordnetes Sägeblatt 15 führt den endgültigen Trennschnitt durch die untere Deckschicht durch. Dieses zweite Sägeblatt kann auf der Welle 16 verschoben werden, um den endgültigen Trennschnitt entweder vorne oder hinten durchzuführen.

Im Betrieb wird zu Beginn auf die untere Deckschicht 17 Trennmittel aufgegeben. Hierdurch wird ein entsprechendes Signal in den Rechner 10 eingegeben. Es erfolgt dann die Aufgabe der Komponenten in dem Beschichtungsportal 8. Die obere Deckschicht 18 wird vor dem Eintritt in die Doppelbandanlage 1 zugeführt. Hierbei zählt das Zählwerk 11 fortlaufend die zurückgelegte Wegstrecke. Wenn eine vorher bestimmte Wegstrecke zurückgelegt ist, wird die Sägeeinrichtung 9 über die Einheit 19 beschleunigt, um beim Sägen eine Relativbewegung in Transportrichtung des Schaumstoffstranges zwischen diesem und der Sägeeinrichtung zu vermeiden. Diese Relativbewegung wird durch das Zählwerk 12 erfaßt und ebenfalls durch ein entsprechendes elektrisches Signal in den Rechner eingegeben. Wenn unter Berücksichtigung des Abstandes zwischen Auftragstation 7 für das Trennmittel und Sägeeinrichtung 9 und der Eigenbewegung der Sägeeinrichtung die gewünschte Querschnittposition erreicht ist, wird der Sägevorgang ausgelöst, wobei genau in dem Bereich gesägt wird, in dem das Trennmittel aufgebracht wurde. Entsprechend der gewünschten Länge der herzustellenden Hartschaumelemente wiederholt sich dieser Vorgang fortlaufend, wobei die entsprechende Stückzahl ebenfalls in dem Rechner gespeichert sein kann.

## Patentansprüche

1. Verfahren zum Herstellen von Hartschaumplatten, insbesondere aus Polyurethan, die an ihrer oberen und unteren Seite mit Deckschichten versehen sind, wobei auf die untere Deckschicht vor dem Auftragen der den Hartschaum bildenden Komponenten ein Trennmittel aufgegeben wird, und nach dem Ausreagieren und Aushärten der Komponenten über dem mit Trennmittel versehenen Abschnitt zwei parallele Querschnitte durchgeführt werden, von denen der eine ein Trennschnitt ist und der andere nur die obere Deckschicht und die Hartschaumschicht durchtrennt, dadurch gekennzeichnet, daß die Aufgabeposition für das Trennmittel und die nach dieser Aufgabe zurückgelegte Wegstrecke der unteren Deckschicht in einen elektronischen Rechner eingegeben werden, der nach Erreichen der Querschnittposition des mit Trennmittel versehenen Abschnittes den Querschnitt auslöst.

2. Verfahren nach Anspruch 1, bei dem die Querschnittposition relativ zur Bewegungsrichtung des Hartschaumstranges verschoben wird, dadurch gekennzeichnet, daß die Verschiebung der Querschnittposition ebenfalls in den Rechner eingegeben und bei der Auslösung der Querschnitte mit berücksichtigt wird.

3. Vorrichtung zur Durchführung des Verfahrens nach Anspruch 1 mit einer aus einem oberen und unteren und jeweils eine Deckschicht 17, 18 aufnehmenden Förderband 2, 3 bestehenden Doppelbandanlage 1, einer Trennmittelstation 7 zum Aufgeben des Trennmittels auf die untere Deckschicht 17, einem Beschichtungsportal 8 zum Auftragen der Hartschaum bildenden Komponenten sowie einer relativ zu dem mit den Deckschichten kaschierten Hartschaumstrang verfahrbaren Sägeeinrichtung 9, dadurch gekennzeichnet, daß die von einer Deckschicht zurückgelegten Wegstrecke durch ein entsprechende elektrische Impulse gebendes Zählwerk (11) festgehalten wird, das die Bewegung eines der Bänder (2 oder 3) der Doppelbandanlage (1) erfaßt.

4. Vorrichtung nach Anspruch 3, dadurch gekennzeichnet, daß das Zählwerk (11) mit einer der Umlenkwellen der Doppelbandanlage (1) verbunden ist.

5. Vorrichtung nach Anspruch 3 oder 4, dadurch gekennzeichnet, daß an der Sägeeinrichtung (9) ein zweites, entsprechende elektrische Signale an den Rechner gebendes Zählwerk (12) vorgesehen ist, das die Relativbewegung der Sägeeinrichtung zwischen Hartschaumstrang und Sägeeinrichtung erfaßt.

6. Vorrichtung nach Anspruch 5, dadurch gekennzeichnet, daß der Rechner (10) unter Berücksichtigung der Signale der beiden Zählwerke (11, 12) die Relativbewegung der Sägeeinrichtung (9) steuert und die Querschnitte erst nach Erreichen der festgelegten Querschnittposition auslöst.

### Claims

1. A process for the production of rigid foam sheets, in particular of polyurethane, which are provided with cover sheets on their upper and lower sides, a parting agent being applied to the lower cover sheet prior to application of the rigid foam-forming components, and, after reaction and curing of the components is complete, two parallel transverse cuts being made over the section provided with parting agent, one of these cuts being a parting cut and the other separating only the upper cover sheet and the rigid foam layer, wherein the position at which the parting agent is applied and the path covered by the lower cover sheet after this application are input into an electronic computer which initiates the transverse cut when the section provided with parting agent has reached the transverse cut position.

2. A process as claimed in claim 1, in which the transverse cut position is displaced relative to the direction of movement of the rigid foam strand, wherein the displacement of the transverse cut position is likewise input into the computer and also taken into account in the initiating of the transverse cuts.

3. Apparatus for carrying out the process as claimed in claim 1, having a double-belt unit 1 consisting of upper and lower conveyor belts 2 and 3, each of which receives a cover sheet 17, 18, a parting agent station 7 for applying the parting agent to the lower cover sheet 17, a coating gantry 8 for applying the rigid foamforming components, and a sawing apparatus 9 which can be driven relative to the rigid foam strand laminated with the cover sheets, wherein the path covered by a cover sheet is recorded by a meter (11) which generates an appropriate electrical pulse and measures the movement of one of the belts (2 or 3) of the double-belt unit (1).

4. Apparatus as claimed in claim 3, wherein the meter (11) is connected to one of the tail shafts of the double-belt unit (1).

5. Apparatus as claimed in either of claims 3 and 4, wherein a second meter (12) which transmits appropriate electrical signals to the computer is provided on the sawing apparatus (9) and measures the movement of the sawing apparatus relative to the rigid foam strand.

6. Apparatus as claimed in claim 5, wherein the computer (10) controls the relative movement of the sawing apparatus (9), taking into account the signals from the two meters (11 and 12), and initiates the transverse cuts only after the specified transverse cut position has been reached.

### Revendications

1. Procédé de fabrication de plaques en matière alvéolaire, ou mousse, rigide, en particulier en polyuréthane, qui sont munies de couches de couverture sur leurs faces de dessus et de dessous, un agent de séparation étant ajouté à la couche de couverture de dessous avant l'application des composants formant la mousse rigide et deux coupes transversales étant effectuées sur le tronçon muni d'agent de séparation, avant la venue en réaction et le durcissement des composants, une des coupes étant une coupe de séparation et l'autre coupe ne sectionnant que la couche de couverture du dessus et la couche de mousse rigide, caractérisé par le fait que la position de distribution de l'agent de séparation et la distance parcourue après cette distribution par la couche de couverture du dessous sont introduites dans un calculateur électronique qui, après atteinte de la position de coupe par le tronçon muni d'agent de séparation, déclenche la coupe.

2. Procédé selon la revendication 1, dans lequel la position de coupe est décalée par rapport à la direction de mouvement du boudin de mousse rigide, caractérisé par le fait que le décalage de la position de coupe est, également, introduit dans le calculateur et il en est tenu compte pour le déclenchement de la coupe.

3. Dispositif pour la mise en oeuvre du procédé selon la revendication 1, comportant une installation à double bande constituée d'une bande transporteuse de dessus (2) et de dessous (3) recevant chacune une couche de couverture (17, 18), un poste d'agent de séparation (7) pour déposer l'agent de séparation sur la couche de couverture du dessous (17), un portique d'enduction (8) pour application des composants formant la mousse rigide, ainsi qu'un moyen de sciage déplaçable par rapport au boudin de mousse rigide enduit des couches de couverture, caractérisé par le fait que la distance parcourue par une couche de couverture est fixée par un compteur (11) fournissant une impulsion électrique correspondante qui enregistre le mouvement d'une des bandes (2 ou 3) de l'installation à double bande (1).

4. Dispositif selon la revendication 3, caractérisé par le fait que le compteur (11) est relié à l'un des arbres de renvoi de l'installation à double bande (1).

5. Dispositif selon la revendication 3 ou 4, caractérisé par le fait que sur le moyen de sciage (9) est prévu un deuxième compteur (12) fournissant des impulsions électriques correspondantes au calculateur qui enregistre le mouvement relatif du moyen de sciage entre boudin de mousse rigide et moyen de sciage.

6. Dispositif selon la revendication 5, caractérisé par le fait que le calculateur (10) commande le mouvement relatif du moyen de sciage (9) en tenant compte des signaux des deux compteurs (11, 12) et ne déclenche la coupe qu'après atteinte de la position de coupe fixée.

FIG.1

EP 0 185 275 B1

FIG.2